# EUROPEAN PATENT SPECIFICATION

(11) **EP 4 086 465 B1**
(45) Date of publication and mention of the grant of the patent: **03.09.2025**
(21) Application number: 22170927.2
(22) Date of filing: 29.04.2022
(51) Int. Cl.: F16B 12/24

(54) **DEVICE FOR JOINING FURNITURE PARTS**
VORRICHTUNG ZUM VERBINDEN VON MÖBELTEILEN
DISPOSITIF D'ASSEMBLAGE DE PIÈCES DE MEUBLES

(30) Priority: 06.05.2021 IT 202100011633
(43) Date of publication of application: 09.11.2022
(73) Proprietor: PERMO s.r.l., 35024 Bovolenta (PD) (IT)
(72) Inventor: TESO, Walter, 30020 Eraclea (VE) (IT)
(74) Representative: Mazzitelli, Maria

(56) References cited:
- CN-A- 109 630 525

## Description

The present invention relates to a device for joining parts of furniture.

It is known that screws for wood, in particular screws known as Confirmat, are mainly used to join panels designed to make up furniture or boxes.

These screws have a threaded shank with a pointed end and a head provided with a recessed, shaped seat for screwing by means of a suitable tool.

The screw is inserted in a through hole provided in one of the two panels to be joined, for example the side of a furniture item, and in a blind hole provided in the other panel, for example the head, base or shelf of the furniture item. During screwing, the thread of the screw bites into the wood or other material, of the panels, keeping them assembled, with the head that remains locked in the through hole due to the larger diameter of its end part.

This type of screw, although quite an effective tool for joining furniture parts, is not satisfactory, in that this application requires a long and effortful screwing time if mechanical means are not available, as well as providing a poor quality aesthetic result. In fact, the head of the screw remains usually visible from the outside and the aesthetic effect does not improve a great deal if it is covered by a cap due to the considerable dimensions of the head of the screw, not to mention that any caps, due to the poor grip, tend to come off.

CN109630525 describes, for example, a furniture panel joining system according to the prior art.

The object of the invention is to obviate the disadvantages mentioned above.

More particularly, an object of the present invention is to provide a device for joining furniture parts which is simple and rapid to install.

A further object of the invention is to provide such a device that guarantees an excellent seal between the elements to be joined.

Yet another object is to provide such a device that is practically invisible from the outside, so as to optimise the aesthetic quality of the furniture item.

A further object of the present invention is to provide such a device that is simple and inexpensive to manufacture.

These and other objects are achieved by the device of the invention having the features of appended claim 1.

Substantially, the device for joining furniture parts, such as a side panel and a shelf, according to the invention, comprises a screw having a threaded shank, suitable for being inserted in a hole provided in the shelf, and a head housed in an aligned hole provided in the side panel,
wherein said screw is enclosed in a shell provided internally with at least one threaded track with which said threaded shank of the screw is engaged, in such a way that a rotation of the screw causes the expansion of the shell against the inner wall of the holes of the parts to be joined.

Advantageous embodiments of the invention are disclosed by the dependent claims.
Further features of the joining device according to the present invention will be made clearer by the following detailed description in which reference is made to the accompanying drawings that show preferred and non-limiting embodiments thereof and in which:
Figure 1 is an axonometric view showing, in blown-up view, the joining device according to the invention between two furniture parts to be joined;
Figure 2 is an axonometric view like that of Figure 1, in which the joining device is shown assembled between the two furniture parts to be joined;

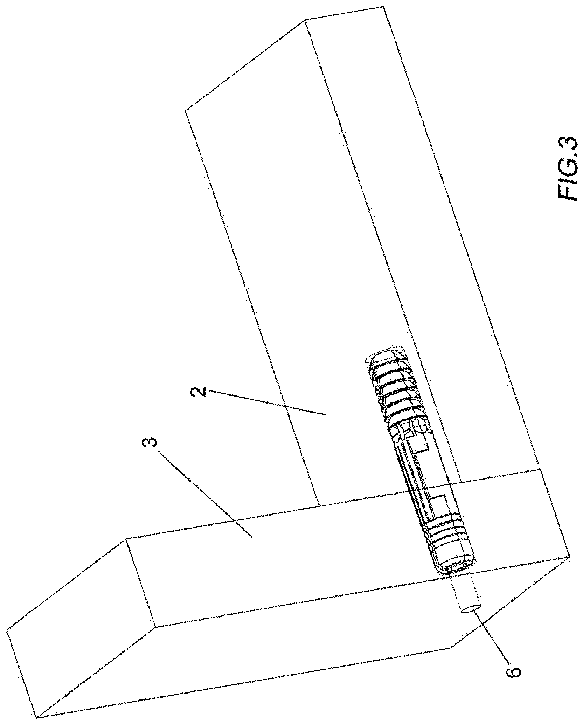

Figure 3 is an axonometric view like that of Figure 2, in which the two furniture parts are shown assembled;
Figure 4 is a vertical section view of the assembled furniture parts of Figure 3;
Figure 5a is a horizontal section view taken along line A-A of Figure 4, in which the screw is shown before screwing;
Figures 6a and 7a are enlarged views of the details enclosed in the circles denoted by letters C and D in Figure 5a, in which the screw is shown before a screwing;

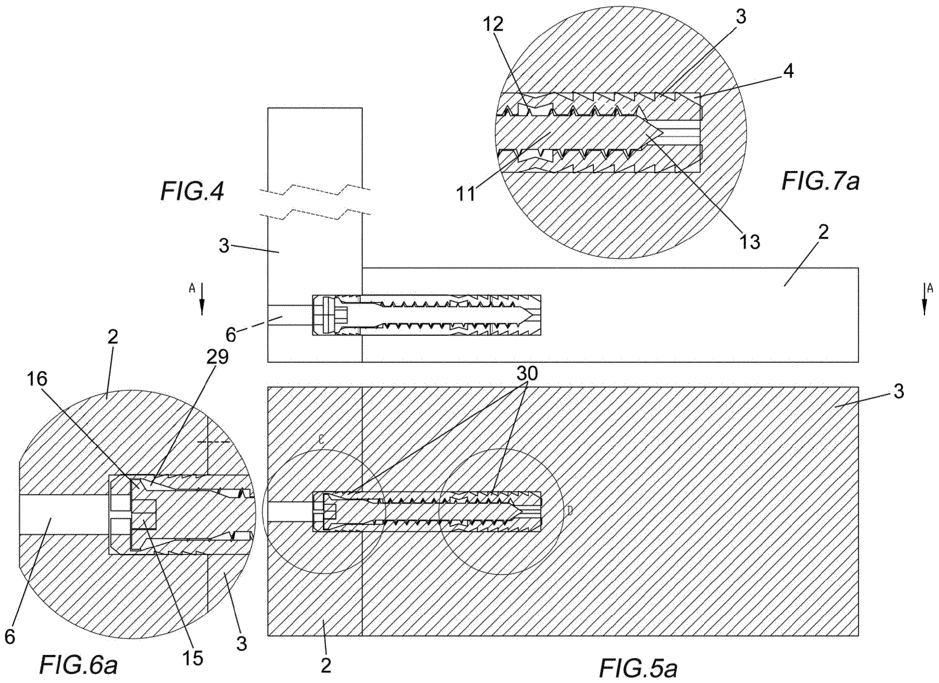

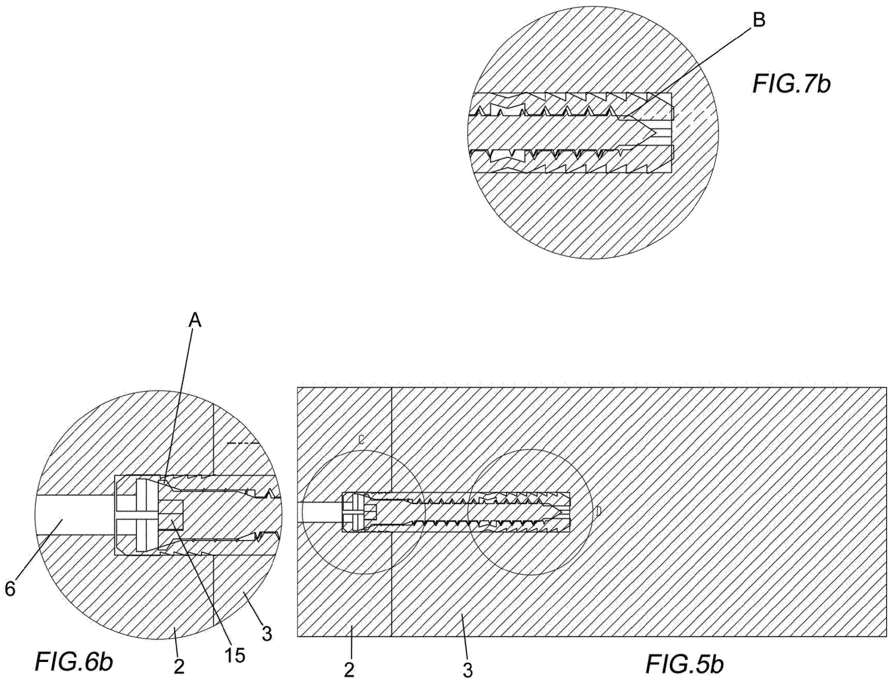

Figures 5b, 6b and 7b are similar views to Figures 5a, 6a and 7a, in which the screw is shown after a screwing.

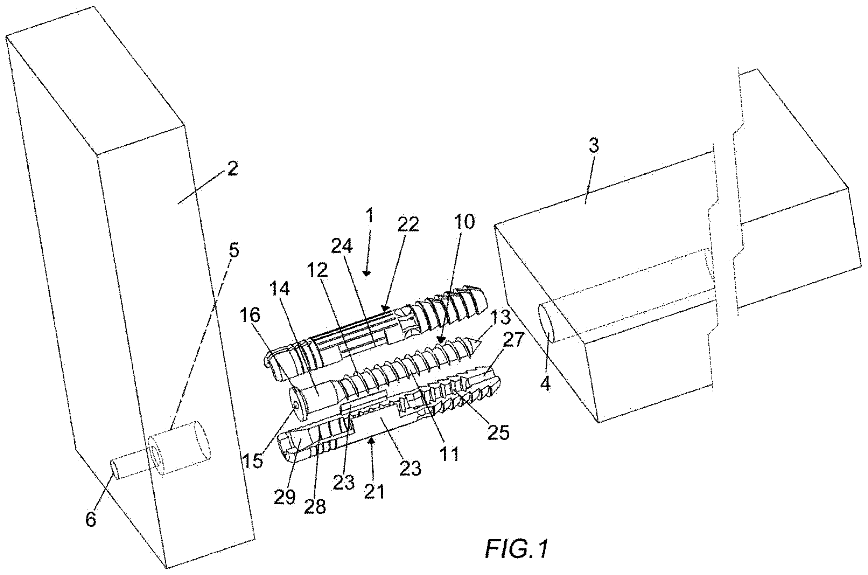

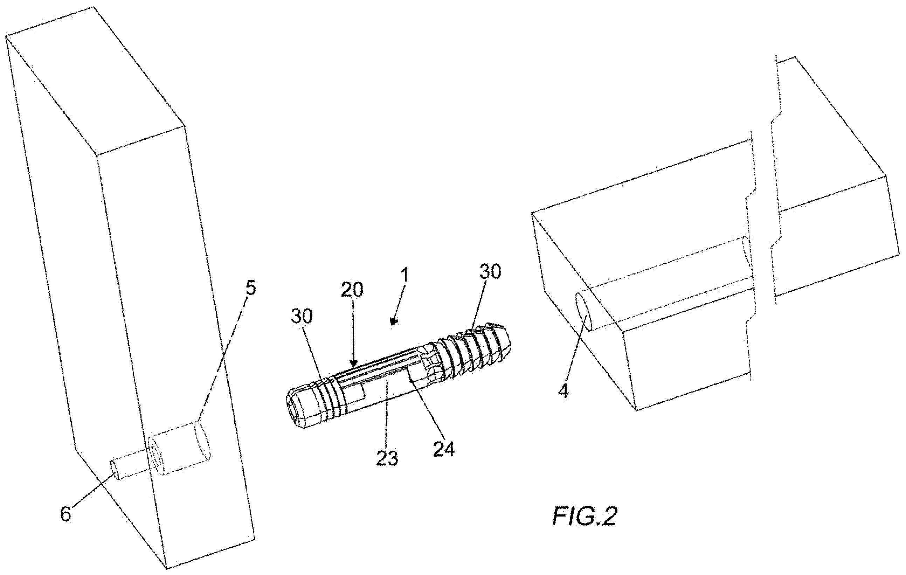

Referring to these drawings, the joining device according to the invention, seen in greater detail in Figures 1 and 2, has been denoted overall by reference numeral 1. It comprises an inner metal screw 10, in particular a Confirmat screw or of another type, and an outer shell 20, conveniently in plastic material.

The screw 10, in a manner in itself known, comprises a shank 11, provided with an outer thread 12 over most of its length and terminating at one end with a point 13 and at the opposite end with a head 14, having a recessed seat 15 for the engaging of a tool to enable screwing thereof. The head 14 has a terminal edge 16 widened with respect to the diameter of the screw.

The shell 20 is made in two half-shells 21, 22 that are securely joined together to enclose the screw 10 in their interior.

In the embodiment shown, the half-shell 21 has a pair of toothed fins 23 that engage in corresponding slots 24 provided in the half-shell 22.

As an alternative to the mechanical closure of the two half-shells, the use of glue or other known systems can be provided. The two half-shells could also be made from a single moulded part, joined one to the other and closable as a "hinge" on screw 10.

According to the invention these half-shells are provided internally with respective threaded tracks 25, with which the thread 12 of the screw 10 engages, and extending substantially for the length of this thread, leaving unthreaded sections 27 and 28 at the two ends, at, respectively, the tip 13 and the head 14 of the screw 10.

Said unthreaded sections 27, 28 are expandable following rotation of the screw 10, as will be mentioned here below. In particular, the section 28 on the side of the head 14 of the screw ends with a conical surface 29 with which the widened edge 16 of the head 14 of the screw will go to interfere.

The joining device 1 serves to connect two furniture item parts or panels which, in the accompanying drawings, are shown, for example, as a side 2 and a shelf 3.

In the shelf 3, a blind hole 4 is formed, of a diameter substantially corresponding to the diameter of the shell 20 and of a length such as to accommodate the shell for its entire extension, except for the section covering the head 14 of the screw, which is housed in a hole 5 of the same diameter formed in part of the thickness of the side 2 and extending outside of the side 2 with a coaxial hole 6 of smaller diameter for the passage of a tool suitable for engaging in the recessed seat 15 in the head of the screw, for actuation of the same.

The functioning of the joining device 1 is quite intuitive.

In assembled condition, as shown in Figure 2, it is inserted in the aligned holes 4, 5 provided respectively in the shelf 3 and in the side 2 of the furniture item to be joined, as shown in Figure 5a, whose details C and D are shown in Figures 6a and 7a, respectively.

With only 2 turns of the screw by means of a special tool inserted through the hole 6 of smaller diameter formed in the side 2, a strong seal of the panels 2, 3 one in relation to the other will be obtained thanks to the expansion of the shell 20 determined by the advancement of the screw.

Figures 5b, 6b and 7b show the situation after a 360° rotation of the screw with respect to the initial condition shown in Figures 5a, 6a and 7a.

In Figure 6b the letter A denotes the zone of interference of the terminal edge 16 of the head 14 of the screw 10 with the inclined surface 29 of the unthreaded section 28 of the shell 20, which determines expansion thereof.

In Figure 7b, the letter B denotes the zone of interference of the last thread of the screw with the unthreaded section 27 of the shell 20, which determines the expansion of this section.

In order to improve the grip of the shell 20 in the holes 4, 5 of the panels 3, 2, at least on its expandable end sections indentations 30 are provided.

The hole 6 of smaller diameter formed in panel 2 can be easily masked with a plug inserted in the same.

From what has been disclosed, the advantages of the invention appear clear, which allows rapid assembly of parts of furniture, with a few turns of rotation of the screw, guaranteeing an excellent seal between the parts to be joined, the head of the screw remaining completely concealed in the corresponding panel.

Although the invention has been described above with particular reference to embodiments thereof given purely by way of non-limiting example, numerous modifications and variations will be apparent to a person skilled in the art in the light of the description given above. The present invention, therefore, is intended to encompass all modifications and variations within the reach of the person skilled in the art which fall within the scope of the following claims.

## Claims

1. Device (1) for joining furniture parts, such as a side (2) and a shelf (3), comprising a screw (10) having a shank (11) with thread (12), able to be inserted in a hole (4) provided in the shelf (3), and a head (14) housed in an aligned hole (5) provided in the side (2),
**characterised in that** said screw (10) is enclosed in a shell (20) internally provided with at least one threaded track (25) with which said thread (12) of the screw (10) engages, so that a rotation of the screw causes the shell (20) to expand against the inner wall of the holes of the parts to be joined , wherein said **characterised in that** said threaded track (25) extends substantially for the length of the thread (12) of the screw, leaving non-threaded expandable portions (27, 28) at the two ends, at, respectively, the tip (13) and the head (14) of the screw (10).

2. Device according to claim 1, **characterised in that** said non-threaded portion (28) on the head side (14) of the screw ends with a conical surface (29) with which a widened edge (16) of the head (14) of the screw interferes, which determines expansion thereof.

3. Device according to claim 1 or 2, **characterised in that** said non-threaded portion (27) of the shell (20) is placed beyond the thread (12) of the screw, such that, following a rotation of the screw, its last thread interferes with this portion (27) causing expansion thereof.

4. Device according to any one of the preceding claims, **characterised in that** said shell (20) is made in two half-shells (21, 22) physically separated or hinged one in relation to the other and closable on the screw (10) mechanically, by means of glue, or other means.

5. Device according to claim 4, **characterised in that** one (21) of said half-shells has at least one toothed fin (23) which hooks in a corresponding slot (24) provided in the other half-shell (22).

6. Device according to any one of the preceding claims, **characterised in that** at least the terminal portions of the shell (20) are provided with indentations (30) for a better grip in the holes (4, 5) of the furniture parts (3, 2) to be joined.

7. Device according to any one of the preceding claims, **characterised in that** said hole (5) formed in part of the thickness of the side (2) extends outside the side (2) with a coaxial hole (6) of smaller diameter for the passage of a tool suitable for engaging in a recessed seat (15) in the head of the screw, for actuation of the same.

## Patentansprüche

1. Vorrichtung (1) zum Verbinden von Möbelteilen, wie einer Seite (2) und einem Regal (3), umfassend eine Schraube (10) mit einem Schaft (11) mit Gewinde (12), die in ein in dem Regal (3) vorgesehenes Loch (4) eingeführt werden kann, und einen Kopf (14), der in einem in der Seite (2) vorgesehenen fluchtenden Loch (5) untergebracht ist, **dadurch gekennzeichnet, dass** die Schraube (10) in einer Schale (20) eingeschlossen ist, das innen mit mindestens einer Gewindespur (25) versehen ist, in die das Gewinde (12) der Schraube (10) eingreift, so dass eine Drehung der Schraube bewirkt, dass sich die Schale (20) gegen die Innenwand der Löcher der zu verbindenden Teile ausdehnt, wobei sich die Gewindespur (25) im Wesentlichen über die Länge des Gewindes (12) der Schraube erstreckt und an den zwei Enden, an der Spitze (13) bzw. dem Kopf (14) der Schraube (10), gewindelose, ausdehnbare Abschnitte belässt.

2. Vorrichtung nach Anspruch 1, **dadurch gekennzeichnet, dass** der gewindelose Abschnitt (28) auf der Kopfseite (14) der Schraube mit einer konischen Fläche (29) endet, mit der eine verbreiterte Kante (16) des Kopfes (14) der Schraube interferiert, die deren Ausdehnung bewirkt.

3. Vorrichtung nach Anspruch 1 oder 2, **dadurch gekennzeichnet, dass** der gewindelose Abschnitt (27) der Schale (20) jenseits des Gewindes (12) der Schraube angeordnet ist, so dass nach einer Drehung der Schraube ihr letztes Gewinde mit diesem Abschnitt (27) interferiert und dessen Ausdehnung verursacht.

4. Vorrichtung nach einem der vorhergehenden Ansprüche, **dadurch gekennzeichnet, dass** die Schale (20) aus zwei Halbschalen (21, 22) besteht, die physisch voneinander getrennt oder gelenkig miteinander verbunden sind und mechanisch, mittels Klebstoffs oder anderer Mittel an der Schraube (10) verschließbar sind.

5. Vorrichtung nach Anspruch 4, **dadurch gekennzeichnet, dass** eine (21) der Halbschalen mindestens eine gezahnte Rippe (23) aufweist, die sich in einen entsprechenden Schlitz (24) einhakt, der in der anderen Halbschale (22) vorgesehen ist.

6. Vorrichtung nach einem der vorhergehenden Ansprüche, **dadurch gekennzeichnet, dass** zumindest die Endabschnitte der Schale (20) mit Einkerbungen (30) für einen besseren Halt in den Löchern (4, 5) der zu verbindenden Möbelteile (3, 2) versehen sind.

7. Vorrichtung nach einem der vorhergehenden Ansprüche, **dadurch gekennzeichnet, dass** sich das Loch (5), das in einem Teil der Dicke der Seite (2) ausgebildet ist, außerhalb der Seite (2) mit einem koaxialen Loch (6) mit kleinerem Durchmesser für den Durchgang eines Werkzeugs erstreckt, das zum Eingriff in einen vertieften Sitz (15) im Kopf der Schraube geeignet ist, um diese zu betätigen.

## Revendications

1. Dispositif (1) d'assemblage de pièces de meuble, telles qu'un côté (2) et une étagère (3), comprenant une vis (10) ayant une tige (11) avec filetage (12), pouvant être insérée dans un trou (4) prévu dans l'étagère (3), et une tête (14) logée dans un trou aligné (5) prévu dans le côté (2),
**caractérisé en ce que** ladite vis (10) est enfermée dans une coque (20) pourvue intérieurement d'au moins une piste filetée (25) avec laquelle le filetage (12) de la vis (10) s'engage, de sorte qu'une rotation de la vis provoque l'expansion de la coque (20) contre la paroi intérieure des trous des pièces à assembler, dans lequel ladite piste filetée (25) s'étend sensiblement sur la longueur du filetage (12) de la vis, en laissant des parties expansibles non filetées aux deux extrémités, respectivement à la pointe (13) et à la tête (14) de la vis (10).

2. Dispositif selon la revendication 1, **caractérisé en ce que** ladite partie non filetée (28) du côté de la tête (14) de la vis se termine par une surface conique (29) avec laquelle interfère un bord élargi (16) de la tête (14) de la vis, ce qui détermine l'expansion de celle-ci.

3. Dispositif selon la revendication 1 ou 2, **caractérisé en ce que** ladite partie non filetée (27) de la coque (20) est placée au-delà du filetage (12) de la vis, de telle sorte que, suite à une rotation de la vis, son dernier filetage interfère avec cette partie (27) en provoquant son expansion.

4. Dispositif selon l'une quelconque des revendications précédentes, **caractérisé en ce que** ladite coque (20) est constituée de deux demi-coques (21, 22) physiquement séparées ou articulées l'une par rapport à l'autre et refermables sur la vis (10) mécaniquement, au moyen de colle, ou par d'autres moyens.

5. Dispositif selon la revendication 4, **caractérisé en ce que** l'une (21) desdites demi-coques comporte au moins une ailette dentée (23) qui s'accroche dans une fente correspondante (24) prévue dans l'autre demi-coque (22).

6. Dispositif selon l'une quelconque des revendications précédentes, **caractérisé en ce qu'**au moins les parties terminales de la coque (20) sont pourvues d'indentations (30) pour une meilleure prise dans les trous (4, 5) des parties de meuble (3, 2) à assembler.

7. Dispositif selon l'une quelconque des revendications précédentes, **caractérisé en ce que** ledit trou (5) formé dans une partie de l'épaisseur du côté (2) se prolonge à l'extérieur du côté (2) par un trou coaxial (6) de plus petit diamètre pour le passage d'un outil apte à s'engager dans un siège encastré (15) dans la tête de la vis, pour l'actionnement de celle-ci.
